# EUROPEAN PATENT APPLICATION

(11) **EP 4 597 312 A2**
(43) Date of publication of application: **06.08.2025**
(21) Application number: 25177803.1
(22) Date of filing: 18.11.2021
(51) Int. Cl.: G06F 9/451

(54) **SYSTEM AND METHOD FOR SELECTIVELY IMPLEMENTING LAYOUT CONFIGURATIONS AMONGST OBJECT GROUPINGS OF A DESIGN UNDER EDIT**

(30) Priority: 18.11.2020 US 202063115608 P
(62) Divisional of application: 21827464.5
(71) Applicant: Figma, Inc., San Francisco, CA 94102 (US)
(72) Inventor: KUWAMOTO, Sho, San Francisco, 94102 (US); WU, William, San Francisco, 94102 (US); WICHARY, Marcin, San Francisco, 94102 (US); LIN, Emily, San Francisco, 94102 (US); ANDERSSON, Rasmus, San Francisco, 94102 (US); RILEE, Kenrick, San Francisco, 94102 (US); KLEIN, Nikolas, San Francisco, 94102 (US); RASMUSSEN, Kris, San Francisco, 94102 (US)
(74) Representative: Nordic Patent Service A/S

(57) **Abstract**

A computing system that operates to implement an interactive graphic design system for enabling users to selectively implement layout configurations amongst object groupings of a design under edit.

## Description

### RELATED APPLICATIONS

This application claims benefit of priority to Provisional U.S. Patent Application No. 63/115,608, filed November 18, 2020; the aforementioned priority application being hereby incorporated by reference in its entirety.

This application is also a continuation-in-part of PCT/US2020/060300, filed November 12, 2020; which claims benefit of priority to U.S. Patent Application No. 16/682,982, filed November 13, 2019; each of the aforementioned priority applications being hereby incorporated by reference in their respective entireties.

### TECHNICAL FIELD

Examples described herein relate to a network computing system and method to implement a design system, and more specifically, a design system to selectively implement layout configurations amongst object groupings of a design under edit.

### BACKGROUND

Software design tools have many forms and applications. In the realm of application user interfaces, for example, software design tools require designers to blend functional aspects of a program with aesthetics and even legal requirements, resulting in a collection of pages which form the user interface of an application. For a given application, designers often have many objectives and requirements that are difficult to track.

### BRIEF DESCRIPTION OF THE DRAWINGS

FIG. 1A illustrates an interactive graphic design system for a computing device of a user, according to one or more examples.
FIG. 1B illustrates a network computing system to implement an interactive graphic design system on a user computing device, according to one or more examples.
FIG. 1C illustrates a network computing system to implement an interactive graphic design system for multiple users in a collaborative network platform, according to one or more examples.
FIG. 2A and FIG. 2B illustrate example methods for providing an interactive graphic design interface, according to one or more examples.
FIG. 3A through FIG. 3L illustrate alternative implementations of layout logic which can be provided by an interactive graphic design system, in accordance with one or more examples.
FIG. 4A through FIG. 4H illustrate examples in which spacing layout configurations of object groupings are visualized on a canvas of a design under edit.
FIG. 5 illustrates example design tools for selecting and implementing layout logic for individual objects of object groupings.
FIG. 6A through FIG. 6C illustrates use of a multi-state design tool that provides a preview of the design tools next state, according to one or more examples.
FIG. 7A and FIG. 7B illustrate implementation of an interactive design tool that can be embedded with a canvas on which a design under edit is rendered.
FIG. 8 illustrates a computer system on which one or more embodiments can be implemented.
FIG. 9 illustrates a user computing device for use with one or more examples, as described.

### DETAILED DESCRIPTION

Examples include a computing system that operates to implement an interactive graphic design system for enabling users to selectively implement layout configurations amongst object groupings of a design under edit.

In examples, a computing system is configured to implement an interactive graphic design system for designer, such as user interface designers ("UI designers"), web designers, and web developers. An interactive graphic design system as described can be used to generate user interfaces, including functional or dynamic user interfaces. Such systems typically integrate a design interface with elements that represent the functional, dynamic nature of the functional user interface.

Examples further provide for an interactive graphic design system which can enable a user to select and apply a layout configuration to an object grouping of a rendered design under edit. Once a layout configuration is applied to an object grouping, the system operates to maintain the layout configuration as the individual objects of the object grouping are manipulated by additional user input. Among other technical benefits, the system enables users to deploy layout logic with a selected object groupings to better control layout configurations amongst objects that actively receive user input.

Still further, in some examples, a network computer system is provided to include memory resources store a set of instructions, and one or more processors are operable to communicate the set of instructions to a plurality of user devices. The set of instructions can be communicated to user computing devices, in connection with the user computing devices being operated to render a corresponding design under edit on a canvas, where the design under edit can be edited by user input that is indicative of any one of multiple different input actions. The set of instructions can be executed on the computing devices to cause each of the computing devices to determine one or more input actions to perform based on user input. The instructions may further cause the user computing devices to implement the one or more input actions to modify the design under edit.

Accordingly, as described with some examples, an example interactive graphic design system can be implemented in a collaborative computing environment, where multiple users can access and contribute to a design interface under edit at the same time. Such examples further recognize that in a collaborative environment, a rendered object grouping can receive input from multiple users, making a desired layout configuration amongst the object groupings difficult to control. An interactive graphic design system as described with some examples is able to maintain, and thereby control, a specific layout configuration amongst a grouping of objects while the objects are being actively manipulated by input from multiple users.

One or more embodiments described herein provide that methods, techniques, and actions performed by a computing device are performed programmatically, or as a computer-implemented method. Programmatically, as used herein, means through the use of code or computer-executable instructions. These instructions can be stored in one or more memory resources of the computing device. A programmatically performed step may or may not be automatic.

One or more embodiments described herein can be implemented using programmatic modules, engines, or components. A programmatic module, engine, or component can include a program, a sub-routine, a portion of a program, or a software component or a hardware component capable of performing one or more stated tasks or functions. As used herein, a module or component can exist on a hardware component independently of other modules or components. Alternatively, a module or component can be a shared element or process of other modules, programs or machines.

Some embodiments described herein can generally require the use of computing devices, including processing and memory resources. For example, one or more embodiments described herein may be implemented, in whole or in part, on computing devices such as servers, desktop computers, cellular or smartphones, tablets, wearable electronic devices, laptop computers, printers, digital picture frames, network equipment (e.g., routers) and tablet devices. Memory, processing, and network resources may all be used in connection with the establishment, use, or performance of any embodiment described herein (including with the performance of any method or with the implementation of any system).

Furthermore, one or more embodiments described herein may be implemented through the use of instructions that are executable by one or more processors. These instructions may be carried on a computer-readable medium. Machines shown or described with figures below provide examples of processing resources and computer-readable mediums on which instructions for implementing embodiments of the invention can be carried and/or executed. In particular, the numerous machines shown with embodiments of the invention include processor(s) and various forms of memory for holding data and instructions. Examples of computer-readable mediums include permanent memory storage devices, such as hard drives on personal computers or servers. Other examples of computer storage mediums include portable storage units, such as CD or DVD units, flash memory (such as carried on smartphones, multifunctional devices or tablets), and magnetic memory. Computers, terminals, network enabled devices (e.g., mobile devices, such as cell phones) are all examples of machines and devices that utilize processors, memory, and instructions stored on computer-readable mediums. Additionally, embodiments may be implemented in the form of computer-programs, or a computer usable carrier medium capable of carrying such a program.

### SYSTEM DESCRIPTION

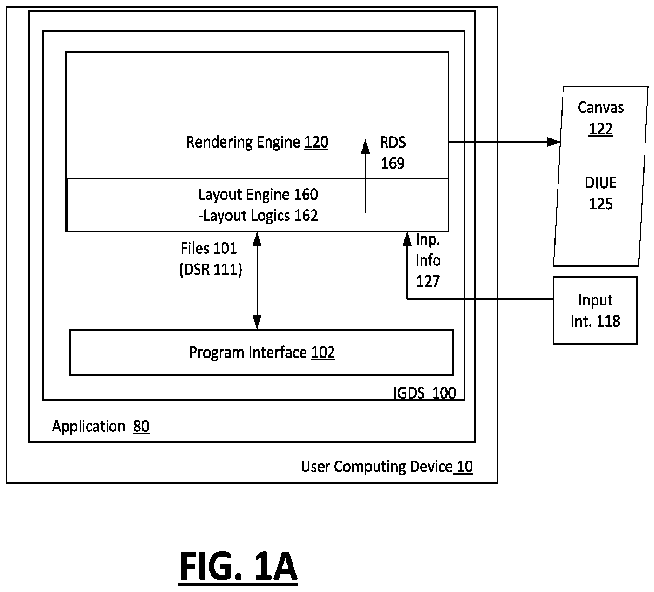

FIG. 1A illustrates an interactive graphic design system for a computing device of a user, according to one or more examples. An interactive graphic design system ("IGDS") 100 can be implemented in any one of multiple different computing environments. For example, in some variations, the IGDS 100 can be implemented as a client-side application that executes on the user computing device 10 to provide functionality as described with various examples. In other examples, such as described below, the IGDS 100 can be implemented through use of a web-based application 80. As an addition or alternative, the IGDS 100 can be implemented as a distributed system, such that processes described with various examples execute on a network computer (e.g., server) and on the user device 10.

According to examples, the IGDS 100 can be implemented on a user computing device 10 to enable a corresponding user to design various types of interfaces using graphical elements. The IGDS 100 can include processes that execute as or through a web-based application 80 that is installed on the computing device 10. As described by various examples, web-based application 80 can execute scripts, code and/or other logic (the "programmatic components") to implement functionality of the IGDS 100. Additionally, in some variations, the IGDS 100 can be implemented as part of a network service, where web-based application 80 communicates with one or more remote computers (e.g., server used for a network service) to executes processes of the IGDS 100.

In some examples, web-based application 80 retrieves some or all of the programmatic resources for implementing the IGDS 100 from a network site. As an addition or alternative, web-based application 80 can retrieve some or all of the programmatic resources from a local source (e.g., local memory residing with the computing device 10). The web-based application 80 may also access various types of data sets in providing the IGDS 100. The data sets can correspond to files and libraries, which can be stored remotely (e.g., on a server, in association with an account) or locally.

In examples, the web-based application 80 can correspond to a commercially available browser, such as GOOGLE CHROME (developed by GOOGLE, INC.), SAFARI (developed by APPLE, INC.), and INTERNET EXPLORER (developed by the MICROSOFT CORPORATION). In such examples, the processes of the IGDS 100 can be implemented as scripts and/or other embedded code which web-based application 80 downloads from a network site. For example, the web-based application 80 can execute code that is embedded within a webpage to implement processes of the IGDS 100. The web-based application 80 can also execute the scripts to retrieve other scripts and programmatic resources (e.g., libraries) from the network site and/or other local or remote locations. By way of example, the web-based application 80 may execute JAVASCRIPT embedded in an HTML resource (e.g., web-page structured in accordance with HTML 5.0 or other versions, as provided under standards published by W3C or WHATWG consortiums). In some examples, the rendering engine 120, layout engine 160 and/or other components may utilize graphics processing unit (GPU) accelerated logic, such as provided through WebGL (Web Graphics Library) programs which execute Graphics Library Shader Language (GLSL) programs that execute on GPUs.

According to examples, user of computing device 10 operates web-based application 80 to access a network site, where programmatic resources are retrieved and executed to implement the IGDS 100. In this way, the user may initiate a session to implement the IGDS 100 for purpose of creating and/or editing a design interface. In examples, the IGDS 100 includes a program interface 102, an input interface 118, a rendering engine 120 and a layout engine 160. The program interface 102 can include one or more processes which execute to access and retrieve programmatic resources from local and/or remote sources.

In an implementation, the program interface 102 can generate, for example, a canvas 122, using programmatic resources which are associated with web-based application 80 (e.g., HTML 5.0 canvas). As an addition or variation, the program interface 102 can trigger or otherwise cause the canvas 122 to be generated using programmatic resources and data sets (e.g., canvas parameters) which are retrieved from local (e.g., memory) or remote sources (e.g., from network service).

The program interface 102 may also retrieve programmatic resources that include an application framework for use with canvas 122.The application framework can include data sets which define or configure, for example, a set of interactive graphic tools that integrate with the canvas 122 and which comprise the input interface 118, to enable the user to provide input for creating and/or editing a design interface.

According to some examples, the input interface 118 can be implemented as a functional layer that is integrated with the canvas 122 to detect and interpret user input. The input interface 118 can, for example, use a reference of the canvas 122 to identify a screen location of a user input (e.g., 'click'). Additionally, the input interface 118 can interpret an input action of the user based on the location of the detected input (e.g., whether the position of the input indicates selection of a tool, an object rendered on the canvas, or region of the canvas), the frequency of the detected input in a given time period (e.g., double-click), and/or the start and end position of an input or series of inputs (e.g., start and end position of a click and drag), as well as various other input types which the user can specify (e.g., right-click, screen-tap, etc.) through one or more input devices. In this manner, the input interface 118 can interpret, for example, a series of inputs as a design tool selection (e.g., shape selection based on location of input), as well as inputs to define attributes (e.g., dimensions) of a selected shape.

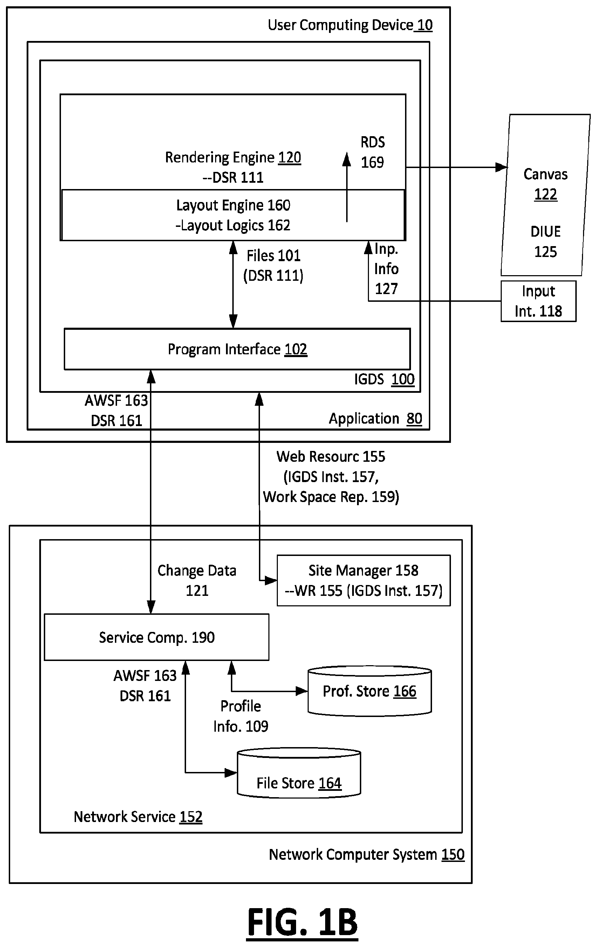

Additionally, the program interface 102 can be used to retrieve, from local or remote sources, programmatic resources and data sets which include files 101 which comprise an active workspace for the user. The retrieved data sets can include one or more pages that include design elements which collectively form a design interface, or a design interface that is in progress. Each file 101 can include one or multiple data structure representations 111 which collectively define the design interface. The files 101 may also include additional data sets which are associated with the active workspace. For example, as described with some examples, the individual pages of the active workspace may be associated with a set of constraints 145. As an additional example, the program interface 102 can retrieve (e.g., from network service 152 (see FIG. 1B), from local memory, etc.) one or more types of profile information 109, such as user profile information which can identify past activities of the user of the computing device 10 when utilizing the IGDS 100. The profile information 109 can identify, for example, input types (or actions) of the user with respect to the page(s) of the active workspace, or more generally, input actions of the user in a prior time interval. In some variations, the profile information 109 can also identify historical or contextual information about individual design interfaces, as represented by corresponding data structure representations 111. As another example, the files 101 can include layout logic 162 for implementing layout configurations amongst object groupings. For example, the files 101 can include a collection of layout logic a user can select and deploy for a given design under edit. Additionally, the files 101 can include data sets which represent a deployed layout logic 162. Such data sets can further include data that links or otherwise associates the particular layout logic 162 with a particular object grouping, as well as data that identifies settings, values and other selections of the user with respect to the manner in which the layout logic 162 is implemented on the design under edit.

In examples, the rendering engine 120 uses the data structure representations 111 to render a corresponding DUE 125 on the canvas 122, where the DUE 125 reflects graphic elements and their respective attributes as provided with the individual pages of the files 101. The user can edit the DUE 125 using the input interface 118. Alternatively, the rendering engine 120 can generate a blank page for the canvas 122, and the user can use the input interface 118 to generate the DUE 125. As rendered, the DUE 125 can include graphic elements such as a background and/or a set of objects (e.g., shapes, text, images, programmatic elements), as well as attributes of the individual graphic elements. Each attribute of a graphic element can include an attribute type and an attribute value. For an object, the types of attributes include, shape, dimension (or size), layer, type, color, line thickness, text size, text color, font, and/or other visual characteristics. Depending on implementation, the attributes reflect properties of two- or three-dimensional designs. In this way, attribute values of individual objects can define, for example, visual characteristics of size, color, positioning, layering, and content, for elements that are rendered as part of the DUE 125.

In examples, individual design elements may also be defined in accordance with a desired run-time behavior. By way of example, some objects can be defined to have run-time behaviors that are either static or dynamic. The attributes of dynamic objects may change in response to predefined run-time events generated by the underlying application that is to incorporate the DUE 125. Additionally, some objects may be associated with logic that defines the object as being a trigger for rendering or changing other objects, such as through implementation of a sequence or workflow. Still further, other objects may be associated with logic that provides the design elements to be conditional as to when they are rendered and/or their respective configuration or appearance when rendered. Still further, objects may also be defined to be interactive, where one or more attributes of the object may change based on user-input during the run-time of the application.

The input interface 118 can receive and process at least some user inputs to determine input information 127, where the input information 127 indicates (i) an input action type (e.g., shape selection, object selection, object sizing input, object positioning input, color selection), (ii) an object that is directly indicated by the input action (e.g., object being resized), (iii) a desired attribute that is to be altered by the input action, and/or (iv) a desired value for the attribute being altered. The rendering engine 120 can receive the input information 127, and the rendering engine 120 can implement changes indicated by the input information 127 to update the DUE 125. When changes are implemented to the DUE 125, the changes can also be reflected in the accompanying data structure representations 111 for the DUE 125.

### LAYOUT ENGINE

In examples, the rendering engine 120 executes in conjunction with a layout engine 160. Among other functions, layout engine 160 operates to enable the user to (i) enable a user to select a layout logic 162 from a collection, (ii) configure the layout logic to selectively deploy and be linked with a selected object grouping, and (iii) implement a layout configuration that is defined by the select layout logic 162 for the linked object grouping while the linked object grouping is being manipulated (e.g., resized or repositioned) by user input. When a particular layout logic 162 is selected and linked to a rendered object grouping, the layout engine 160 can further operate to detect and receive input information 127 for user inputs that are directed to the linked object grouping.

According to some examples, the layout engine 160 can process the input information 127, which may indicate, for example, a resizing or repositioning of one or more objects of the object grouping, using the select layout logic 162 that is linked to that object grouping. The layout engine 160 can execute the selected layout logic 162 to determine, for example, a resizing or repositioning of individual objects of the object grouping for purpose of maintaining a layout configuration that is defined by the linked layout logic 162 while carrying out the corresponding input action of the user. The layout engine 160 can further generate a result data set 169 from implementing the linked layout logic 162. The result data set 169 can include position information, boundary information (e.g., position information that identifies one or more boundaries of an object or object set) and/or dimensional information (e.g., one or more dimensions of a frame of an object or object set) for individual objects of the linked object grouping. The result data set 169 can represent a change to the object grouping as a result of the user input (e.g., to resize or reposition object(s) of the object grouping), as well as the implementation of the predefined layout configuration. The rendering engine 120 can process the result data set 169 to reflect the changes to the object grouping, stemming from the user input and the implementation of the predefined layout configuration of the selected layout logic 162.

Each layout logic 162 can include an instruction set and data that collectively rules and settings for implementing a predefined layout configuration amongst object grouping. By way of example, the layout logic 162 can define a layout configuration that identifies a relative positioning, dimensional relationship and/or spacing as between or amongst individual objects of a linked object grouping.

As described in greater detail, a user can provide selection input to select one or more layout logics 162 of a layout logic collection for deployment with a select grouping of objects that are rendered as part of the DUE 125. In examples, the layout engine 120 can associate a selected layout logic 162 with a particular object grouping, such as a parent child grouping. Once the selected layout logic 162 is associated with a particular object grouping, the layout engine 160 can implement the predefined layout configuration as a response to one or more predefined triggers of the select layout logic 162.

As further described, the layout configurations which are implemented by the layout engine 160 can be instant and responsive to changes made to other objects of the select object grouping. In examples, the layout engine 160 can execute the selected layout logic 162 to (i) detect user input to resize or reposition a specific object of the object grouping, (ii) calculate changes to make in size or position to one or more objects in order to implement the layout configuration of the selected layout logic 162, (iii) communicate the changes (e.g., object positioning data, object border data) to the rendering engine 120 for rendering, along with a change resulting from user input. In examples, the layout engine 160 can execute with rendering engine 120 to fluidly, and in-real time, reflect changes to an object grouping as a result of user input to one or more of the objects of the object grouping. For example, the operations of detecting, calculating and rendering can be done at a speed that is approximately equal to 0.0167 seconds, so that the changes caused by user input and implementation of the layout configuration appear fluid and instant to the user operating a 60HZ monitor.

The layout engine 160 can execute select layout logic 162 to automatically implement one or more layout configurations amongst object groupings that are arranged, or otherwise linked, to have a parent/child relationship. For example, a user can interact with DUE 125 to parent an object to another object (e.g., select and drag one object over another object). In parent/child object groupings, the child object(s) may be positioned within a frame of the parent object. The layout engine 160 can execute select layout logics 160 to automatically resize or reposition one or more objects of a respective linked parent child grouping, where the resizing/repositioning is based on resizing or repositioning changes of other objects of the parent child grouping.

By way of examples, layout engine 160 can execute a first layout logic 162 to implement a first layout configuration in which a dimension of a parent object is resized to minimize a difference between dimension(s) of the parent and child object(s) (e.g., parent object 'hugs' child objects). Additionally, the layout engine 160 can execute a second layout logic to implement a second layout configuration in which a dimension of one or more child object(s) are resized to minimize a difference between the dimensions of the parent and child object(s) (e.g., by having child object(s) 'fill' the parent object). As an addition or variation, the layout engine 160 can execute additional layout logics 162 that implement one or more spacing configurations as between select objects of the object groupings (e.g., as between child and parent objects, and/or as between child objects).

As another addition or variation, the layout engine 160 can execute layout logic 162 to implement configurations for wrapping, reverse wrapping or no wrapping with respect to child objects that are added or removed from a parent object, so as increase or decrease a collective size of the child objects within a parent object. In a wrapping configuration, the addition of child objects can cause a dimension of a parent object to increase in a particular direction (e.g., downward) to accommodate the addition, and an orientation of the collective child objects expanding (e.g., by addition of child objects) can reflect that direction. Similarly, in reverse wrapping, the reduction of child objects can cause a dimension of a parent object to decrease in a particular direction to accommodate removal of an object from the parent object, and a dimension of the collective child objects can similarly reduce in that direction.

For an associated object grouping, the layout logic 162 can define (i) a target object set of one or more target objects, (ii) as associated object set of one or more associated objects, and (iii) rules and/or settings that define a layout configuration for the target object(s). The target object set can correspond to the object(s) that are to be subject to the layout configuration, as implemented by the layout engine 160. The associated object set can include objects of the object grouping that can trigger the layout engine 160 to implement the select layout configuration on the target object set. In defining the associated object set, the select layout logic 162 can also define one or more attributes of the associated object set which can trigger the layout engine 160 to implement the respective predefined layout configuration on the respective target object set. As an addition or variation, the select layout logic 162 can define a change to a dimensional attribute or position of the associated object set, for purpose of defining when changed to the dimensional attribute or position of the associated object triggers the layout engine 160 to implement the predefined layout configuration on the target object set. By way of an example, the layout logic 162 can provide that any change to the dimension of the associated object triggers implementation of the predefined layout configuration for the target object set. As another example, the layout logic 162 can provide that any change to a position of a portion of an associated object (e.g., position or coordinates of an object's boundary) triggers implementation of the predefined layout configuration for the target object set. In this way, the layout logic 162 can be responsive to one or more dimensional or positional changes of an associated object set.

Moreover, in some examples, users can specify that the application of the layout logic 162 is specific to a particular direction or orientation (e.g., horizontal, vertical). If a layout configuration is specified to be specific to a particular direction or orientation, the layout engine configures implementation of the layout configuration to be specific to the specified direction. Further, the layout logic 162 is only responsive to resizing or repositioning of the associated object set in the specified direction.

Additionally, in some examples, the user can specify thresholds that define a magnitude or amount of change to an associate object set that is resized or repositioned, before the selected layout logic 162 implements a predefined layout configuration.

According to some examples, layout engine 160 can implement operations to determine, in real-time, coordinates of a portion of an associated object (e.g., a left, right, top or bottom boundary of the associate object's frame, a corner of the associate object's frame, etc.) that is being repositioned, as part of a user input operation to resize or move the associated object or otherwise alter an associated object set. The layout engine 160 can utilize the determined coordinates of the portion of the associated object that is being manipulated as input for the layout configuration of the target object set. In examples, the layout engine 160 can obtain and act on the coordinate information obtained for the parent object, so as to instantly implement the layout configuration on the target object set.

By way of examples, the select layout logics 162 that can be deployed for use in association with a parent child object grouping can include fill layout logic, hug layout logic, and one or more spacing layout logics. As described elsewhere, the fill layout logic can implement a fill layout configuration where one or more child objects are automatically resized and/or repositioned, as a response to input that resizes or repositions the parent object. In variations, the fill layout logic can be configured to apply changes to the target object set (child object(s)) in a particular direction (e.g., horizontal or vertical directions), as a response to changes to the associated object set (parent object) which are in the same particular direction.

The hug layout logic can implement a fill layout configuration where a parent object is automatically resized and/or repositioned. A trigger for the hug layout logic can include input that resizes or repositions individual child objects or the respective child objects collectively. In variations, the hug layout logic can also be configured to apply changes to the target object set (parent) in a particular direction (e.g., horizontal or vertical directions), as a response to changes to the associated object set (child object(s)) which are in the same particular direction.

As an additional example, an even spacing layout logic can implement a spacing configuration amongst child objects of a parent/object grouping, where the child objects are maintained in a configuration where they are evenly spaced from one another. The target object set of the even spacing layout logic can correspond to all child objects of a parent/child object grouping, and the associated object set of the even spacing layout logic can correspond to the parent object and all of the child objects of the parent/child object grouping.

When the even spacing layout logic is deployed with a parent/child object grouping, the layout engine 160 can respond to the parent object being resized by equally resizing each child object of the parent object, and further by repositioning each child object (as resized) to be spaced from its respective neighbor child object(s) by the same amount. The layout engine 160 can respond to the parent object being repositioned in similar fashion - by repositioning all of the child objects to maintain the even spacing between the child objects. In some implementations, if an additional child object is added to the parent object, or if one or more of the child objects are resized, the layout engine 160 automatically repositions each of the child objects to maintain the equal spacing amongst all adjacent pairs of child objects. Additionally, in variations, the even spacing layout logic can be configured to implement the spacing configuration to the target object set (all of the child objects) in a particular direction (e.g., horizontal or vertical directions), as a response to changes to the associated object set (child object, parent object) that are in the same particular direction.

As another example, a fixed spacing layout logic can implement a fixed spacing configuration amongst adjacent objects of an object grouping. In a parent/child object grouping, the fixed spacing configuration can specify a fixed spacing between, for example, a boundary of a child object (e.g., a boundary corresponding to a portion of a frame of the child object) and a boundary of a parent object (e.g., a boundary corresponding to a portion of a frame of the parent object). Thus, for example, input by a user to reposition or resize a parent object can cause the layout engine 160 to reposition the child object so that the fixed spacing between the respective boundaries of the parent and child objects is maintained.

### NETWORK COMPUTING SYSTEM TO IMPLEMENT IGDS

FIG. 1B illustrates a network computing system to implement an interactive graphic design system on a user computing device, according to one or more examples. A network computing system such as described with an example of FIG. 1B can be implemented using one or more servers which communicate with user computing devices over one or more networks.

In an example of FIG. 1B, the network computing system 150 performs operations to enable the IGDS 100 to be implemented on the user computing device 10. In variations, the network computing system 150 provides a network service 152 to support the use of the IGDS 100 by user computing devices that utilize browsers or other web-based applications. The network computing system 150 can include a site manager 158 to manage a website where a set of web-resources 155 (e.g., web page) are made available for site visitors. The web-resources 155 can include instructions, such as scripts or other logic ("IGDS instructions 157"), which are executable by browsers or web components of user computing devices.

In some variations, once the computing device 10 accesses and downloads the web-resources 155, web-based application 80 executes the IGDS instructions 157 to implement functionality such as described with some examples of FIG. 1A. For example, the IGDS instructions 157 can be executed by web-based application 80 to initiate the program interface 102 on the user computing device 10. The initiation of the program interface 102 may coincide with the establishment of, for example, a web-socket connection between the program interface 102 and a service component 190 of the network computing system 150.

In some examples, the web-resources 155 includes logic which web-based application 80 executes to initiate one or more processes of the program interface 102, causing the IGDS 100 to retrieve additional programmatic resources and data sets for implementing functionality as described by examples. The web resources 155 can, for example, embed logic (e.g., JAVASCRIPT code), including GPU accelerated logic, in an HTLM page for download by computing devices of users. The program interface 102 can be triggered to retrieve additional programmatic resources and data sets from, for example, the network service 152, and/or from local resources of the computing device 10, in order to implement the IGDS 100. For example, some of the components of the IGDS 100 can be implemented through web-pages that can be downloaded onto the computing device 10 after authentication is performed, and/or once the user performs additional actions (e.g., download one or more pages of the workspace associated with the account identifier). Accordingly, in examples as described, the network computing system 150 can communicate the IGDS instructions 157 to the computing device 10 through a combination of network communications, including through downloading activity of web-based application 80, where the IGDS instructions 157 are received and executed by web-based application 80.

The computing device 10 can use web-based application 80 to access a website of the network service 152 to download the webpage or web resource. Upon accessing the website, web-based application 80 can automatically (e.g., through saved credentials) or through manual input, communicate an account identifier to the service component 190. In some examples, web-based application 80 can also communicate one or more additional identifiers that correlate to a user identifier.

Additionally, in some examples, the service component 190 can use the user or account identifier of the user identifier to retrieve profile information 109 from a user profile store 166. As an addition or variation, profile information 109 for the user can be determined and stored locally on the user's computing device 10. As described with other examples, the user profile information can be used to infer an outcome of an input action, based on the inputs of the user with respect to the DUE 125 (such as detected by the input interface 118). For example, the profile information 109 can be communicated to the IGDS 100, where the profile information 109 can be used to implement and develop the predictive logic 134.

The service component 190 can also retrieve the files of an active workspace ("active workspace files 163") that are linked to the user account or identifier from a file store 164. The profile store 166 can also identify the workspace that is identified with the account and/or user, and the file store 164 can store the data sets that comprise the workspace. The data sets stored with the file store 164 can include, for example, the pages of a workspace, data sets that identify constraints for an active set of workspace files, and one or more data structure representations 161 for the design under edit which is renderable from the respective active workspace files.

Additionally, in examples, the service component 190 provides a representation 159 of the workspace associated with the user to the web-based application 80, where the representation identifies, for examples, individual files associated with the user and/or user account. The workspace representation 159 can also identify a set of files, where each file includes one or multiple pages, and each page including objects that are part of a design interface.

On the user device 10, the user can view the workspace representation through web-based application 80, and the user can elect to open a file of the workspace through web-based application 80. In examples, upon the user electing to open one of the active workspace files 163, web-based application 80 initiates the canvas 122. For example, the IGDS 100 can initiate an HTML 5.0 canvas as a component of web-based application 80, and the rendering engine 120 can access one or more data structures representations 111 of a design interface under edit, to render the corresponding DUE 125 on the canvas 122.

The service component 190 may also determine, based on the user credentials, a permission setting or role of the user in connection with the account identifier. The permission settings or role of the user can determine, for example, the files which can be accessed by the user. In some examples, the implementation of the rendering engine 120 on the computing device 10 can be configured based at least in part on the role or setting of the user.

In examples, the changes implemented by the rendering engine 120 to the DUE 125 can also be recorded with the respective data structure representations 111, as stored on the computing device 10. As described with some examples, the rendering engine 120 can implement changes reflected by user information 127, as well as changes represented by the result data set 169, as generated by the layout engine 160 implementing one or more select layout logic 162. The layout engine 160 can determine the result data set 169 for objects of an object grouping which is linked to a particular layout logic 162, when one or more of the objects are resized or reshaped by user input.

The program interface 102 can repeatedly, or continuously stream change data 121 to the service component 190, wherein the updates reflect edits as they are made to the DUE 125 and to the data structure representation 111 to reflect changes made by the user to the DUE 125 and to the local data structure representations 111 of the DUE 125. The service component 190 can receive the change data 121, which in turn can be used to implement changes to the network-side data structure representations 161. In this way, the network-side data structure representations 161 for the active workspace files 163 can mirror (or be synchronized with) the local data structure representations 111 on the user computing device 10. When the rendering engine 120 implements changes to the DUE 125 on the user device 10, the changes can be recorded or otherwise implemented with the local data structure representations 111, and the program interface 102 can stream the changes as change data 121 to the service component 190 in order to synchronize the local and network-side representations 111, 161 of the DUE 125. This process can be performed repeatedly or continuously, so that the local and network-side representations 111, 161 of the DUE 125 remain synchronized.

Additionally, the program interface 102 can record a selected layout logic 162 being applied to a particular object grouping. The active workspace files 163, for example, can include instructions and data (e.g., a file) for a selected layout logic 162. Additionally, the local data structure representations 111 can identify the portion of the DUE 125 for which input information 127 is to be handled by the layout engine 160.

### COLLABORATIVE NETWORK PLATFORM

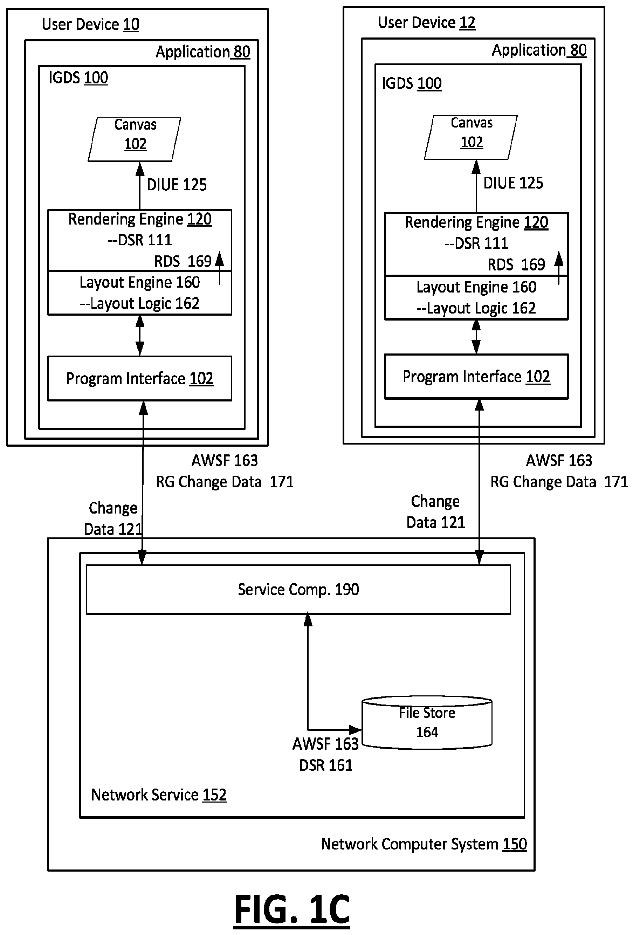

FIG. 1C illustrates a network computing system to implement an interactive graphic design system for multiple users in a collaborative network platform, according to one or more examples. In an example of FIG. 1C, a collaborative network platform is implemented by the network computing system 150, which communicates with multiple user computing devices 10, 12 over one or more networks (e.g., World Wide Web) to implement the IGDS 100 on each computing device. While FIG. 1C illustrates an example in which two users utilize the collaborative network platform, examples as described allow for the network computing system 150 to enable collaboration on design interfaces amongst a larger group of users.

With respect to FIG. 1C, the user computing devices 10, 12 can be assumed as being operated by users that are associated with a common account, with each user computing device 10, 12 implementing a corresponding IGDS 100 to access the same workspace during respective sessions that overlap with one another. Accordingly, each of the user computing devices 10, 12 may access the same set of active workspace files 163 at the same time, with the respective program interface 102 of the IGDS 100 on each user computing device 10, 12 operating to establish a corresponding communication channel (e.g., web socket connection) with the service component 190.

In examples, the service component 190 can communicate a copy of the active workspace files 163 to each user computing device 10, 12, such that the computing devices 10, 12 render the DUE 125 of the active workspace files 163 at the same time. Additionally, each of the computing devices 10, 12 can maintain a local data structure representation 111 of the respective DUE 125, as determined from the active workspace files 163. The service component 190 can also maintain a network-side data structure representation 161 obtained from the files of the active workspace 163, and coinciding with the local data structure representations 111 on each of the computing devices 10, 12.

The network computing system 150 can continuously synchronize the active workspace files 163 on each of the user computing devices. In particular, changes made by users to the DUE 125 on one computing device 10, 12 may be immediately reflected on the DUE 125 rendered on the other user computing device 10, 12. By way of example, the user of computing devices 10 can make a change to the respective DUE 125, and the respective rendering engine 120 can implement an update that is reflected in the local copy of the data structure representation 111. Additionally, as described with other examples, the layout engine 160 can execute selected layout logic 162 for linked object groupings of the DUE 125, and the layout engine 160 can communicate the result data set 169 to the rendering engine 120 for implementing updates to the object grouping of the DUE 125. From the computing device 10, the program interface 102 of the IGDS 100 can stream change data 121, reflecting the change of the user input, to the service component 190. The service component 190 processes the change data 121 of the user computing device. The service component 190 can use the change data 121 to make a corresponding change to the network-side data structure representation 161. The service component 190 can also stream remotely-generated change data 171 (which in the example provided, corresponds or reflects change data 121 received from the user device 10) to the computing device 12, to cause the corresponding IGDS 100 to update the DUE 125 as rendered on that device. The computing device 12 may also use the remotely generated change data 171 to update with the local data structure representation 111 of that computing device 12. The program interface 102 of the computing device 12 can receive the update from the network computing system 150, and the rendering engine 120 can update the DUE 125 and the respective local copy of 111 of the computing device 12.

The reverse process can also be implemented to update the data structure representations 161 of the network computing system 150 using change data 121 communicated from the second computing device 12 (e.g., corresponding to the user of the second computing device updating the DUE 125 as rendered on the second computing device 12). In turn, the network computing system 150 can stream remotely generated change data 171 (which in the example provided, corresponds or reflects change data 121 received from the user device 12) to update the local data structure representation 111 of the DUE 125 on the first computing device 10. In this way, the DUE 125 of the first computing device 10 can be updated as a response to the user of the second computing device 12 providing user input to change the DUE 125.

To facilitate the synchronization of the data structure representations 111, 111 on the computing devices 10, 12, the network computing system 150 may implement a stream connector to merge the data streams which are exchanged between the first computing device 10 and the network computing system 150, and between the second computing device 12 and the network computing system 150. In some implementations, the stream connector can be implemented to enable each computing device 10, 12 to make changes to the network-side data representation 161, without added data replication that may otherwise be required to process the streams from each device separately.

Additionally, over time, one or both of the computing devices 10, 12 may become out-of-sync with the server-side data representation 161. In such cases, the respective computing device 10, 12 can redownload the active workspace files 163, to restart its maintenance of the data structure representation of the DUE 125 that is rendered and edited on that device.

Further, as described by other examples, the layout engine 160 can execute selected layout logic 162 to implement a predefined layout configuration amongst a grouping of objects (e.g., parent child object grouping). In this way, the layout engine 160 can execute a select layout logic 162 for a linked object grouping in order to implement and maintain a configuration in which a parent object is resized maintain a dimensional relationship with respect to one or more of its child objects. For example, the layout configuration can provide for a parent object to be set to a dimension that borders, or is slightly larger than the combined or overall dimensions of its child objects (e.g., "hug layout logic"). When a user provides input that changes the combined or overall dimension of the child object, the parent object is resized accordingly, to maintain the set dimensional relationship between the parent object and its child objects.

When layout engine 160 is implemented in a collaborative environment, the IGDS can facilitate users of different roles and/or skill-level in collaborating on a given DUE 125. For example, the rendering engine 120 can execute the layout logic 160 to enable a user that is highly-skilled and/or whom has primary control ("primary user") of the DUE 125, to select to have a parent/child grouping of objects associated with the layout configuration or behavior. A second user who collaborates on the DUE 125 may then enter input that manipulates the child object, without having to perform the additional task of resizing the parent object. Through use of layout engine 160, the primary user can control size and position parameters relating to an object grouping, so as to better control other users (e.g., less-skilled or secondary users) from manipulating the object grouping in a manner that is undesired. In this way, the layout engine 160 enables primary or skilled users to select layout logic 162 to implement quality control in the design of select object groupings.

### METHODOLOGY

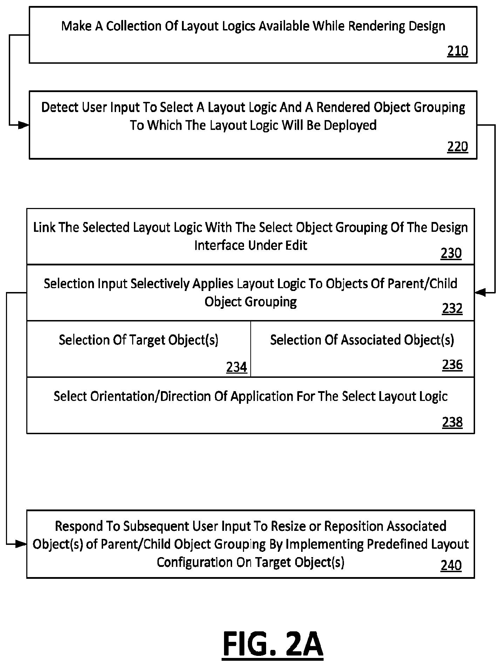

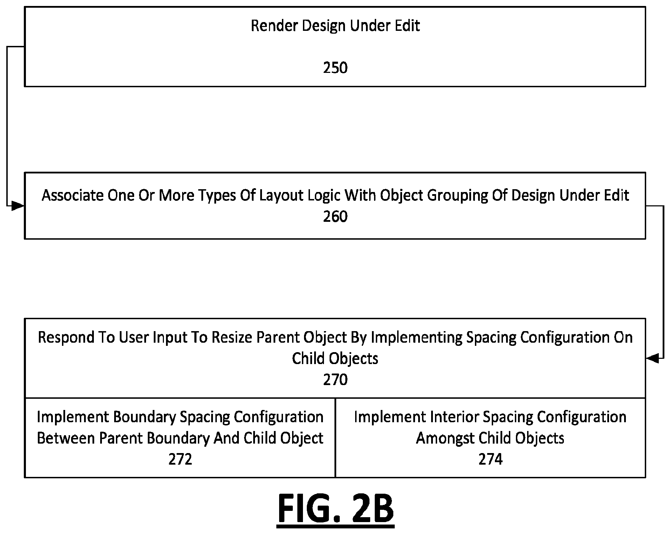

FIG. 2A and FIG. 2B illustrate example methods for providing an interactive graphic design interface, according to one or more examples. Methods such as described by examples of FIG. 2A or FIG. 2B may be implemented on, for example, a user computing device that is configured to enable users to generate and edit design interfaces. For example, a method such as described by FIG. 2A or FIG. 2B may be implemented by user computing devices on which an integrated graphic design system ("IGDS") such as described with examples of FIG. 1A through FIG. 1C is implemented. Accordingly, reference may be made to elements of FIG. 1A through FIG. 1C for purpose of illustrating suitable components for performing a step or sub-step being described.

In examples, the user computing device 10, 12 can operate to (i) render a design interface under edit, and (ii) enable the user to edit the design interface under edit. The layout engine 160 operates to make available multiple layout logics 162 in connection with rendering DUE 125 (210). The IGDS 100 can provide interactive tools to enable users to select and apply one or more layout logics 162 made available through the layout engine 160, for use with rendered object groupings on a canvas 122. Each layout logic 162 can define target object(s), associated object(s), and a layout configuration, which can specify, for example, spacing, positioning and dimensioning of target objects relative to associated objects and/or other references.

The layout engine 160 detects user input to select a layout logic 162 and a rendered object grouping to which the layout logic 162 is deployed (220). In response to selection input from the user that selects a layout logic 162 of the collection, the IGDS 100 links or otherwise deploys the layout logic 162 with the select object grouping (e.g., parent/child object grouping) (230). When the layout logic 162 is selected and deployed to a select object grouping, execution of the select layout logic 162 identifies (i) a target object set of the object grouping which are to be subject to a predefined layout configuration of the select layout logic 162, and (ii) an associated object set of the object grouping, which, if manipulated (e.g., by dimension or position), triggers the layout engine 160 automatically implement the respective predefined layout configuration on the target object set. As an example, a first type of layout logic 162 (e.g., fill layout logic) can be applied to a parent/child object grouping, with a layout configuration that is applied to child object(s) as a response to changes to the parent object of the parent/child grouping. Additionally, as another example, a second type of layout logic 162 (e.g., hug layout) can be applied to a parent/child object grouping, with a layout configuration that is applied to a parent object as a response to changes to child object(s) of the parent/child grouping.

In examples, the selection input from the user can selectively apply the select layout logic 162 to objects of the parent/child object grouping (232). In some examples, the user can provide selection input to select one or more target objects from a larger class of target objects which can be subject to the layout configuration of the selected layout logic 162 (234). For example, in the case of fill layout logic, the selection input can identify which of multiple child objects are to be resized or repositioned in response to changes made to the parent object of the grouping.

Additionally, in other examples, the user can provide selection input to select one or more associated objects from a larger class of associated objects which could trigger the layout configuration of the selected layout logic 162 to be applied to an identified set of target object(s) (236). For example, in the case of hug layout logic, this selection input identifies which of multiple child objects can be resized or repositioned to trigger resizing or repositioning of the parent object of the parent/child object grouping.

Additionally, in some examples, the selection input of the user can select an orientation or direction of application for the select layout logic 162 (238). For example, a user can provide selection input (via the interactive tools) to configure the selected layout logic 162 to apply in one of a horizontal orientation, vertical orientation, or horizontal and vertical orientation.

Once a particular layout logic 162 is selected, configured and associated with an object grouping, subsequent user input with regards to the identified associated objects of the object groupings triggers the layout engine 160 to automatically and responsively implement the defined layout configuration on the target object(s) that are identified by the layout logic 162 (240). As described with some examples, the layout engine 160 can resize and/or reposition objects of the object grouping in order to conform the object grouping to the predefined configuration of the select layout logic. In examples, the layout engine 160 can communicate the result data set 169 to the rendering engine 120, to cause the rendering engine 120 to implement the changes resulting from implementing the layout configuration on the select object groupings.

With reference to an example of FIG. 2B, the IGDS 100 operates to render a DUE 125 (250). For example, as described with other examples, user computing device 10, 12 can include a rendering engine that renders a design under edit, and further enables the user to provide input to alter the design under edit.

In examples, the IGDS 100 can associate one or more types of layout logic with an object grouping of the design under edit (260). For example, layout engine 160 can make layout logics available for user selection, and the user can select a particular layout logic to be linked to a particular object grouping.

In examples, the IGDS 100 enables the user to select which layout logic to associate or apply to an object grouping. In implementations, layout logic 162 can be associated with object groupings that can be triggered with subsequent user input to manipulate one or more objects of the groupings. The layout logic 162 can be associated by default, or selected through, for example, user selection via a menu or user interface feature provided by the IGDS 100. In some implementations, the layout object can be implemented automatically in response to user input to apply the particular layout logic. In other cases, selection of the layout logic can result in the layout logic automatically implementing a particular configuration amongst at least some of the objects of the grouping, as a response to user input to manipulate one or more of the object groupings.

In examples, layout object can be associated with a parent/child grouping of objects. The layout object can be triggered by user input to resize, for example, a dimension of the parent object, to automatically reconfigure an aspect of the child object(s).

According to some examples, the IGDS 100 responds to a user input to alter a dimension of a parent object from a first value to a second value, and in response to the user input, the IGDS 100 automatically implements a spacing configuration for the child objects (270). The spacing configuration can provide that a boundary spacing between at least a first border of the parent object and an adjacent child object to that border is unchanged as the dimension of the parent object is altered from the first value to the second value (272). As an addition or variation, an interior spacing between each adjacent pair of child objects are made (or maintained) equal to one another when the dimension of the parent object is altered to the second value (274).

Accordingly, in examples in which IGDS 100 is implemented in a collaborative environment, a first user can provide input to select a first layout logic to associate with a given group of objects. As described with some examples, a corresponding layout configuration can subsequently be implemented in response to input provided by a second user with respect to one or more objects of the groupings. For example, a first user can specify a layout logic for a parent/child grouping of objects, where the layout logic implements a spacing configuration for the child objects. Subsequently, a second user can manipulate the parent object of the grouping, to implement the spacing configuration for the child objects.

### EXAMPLES

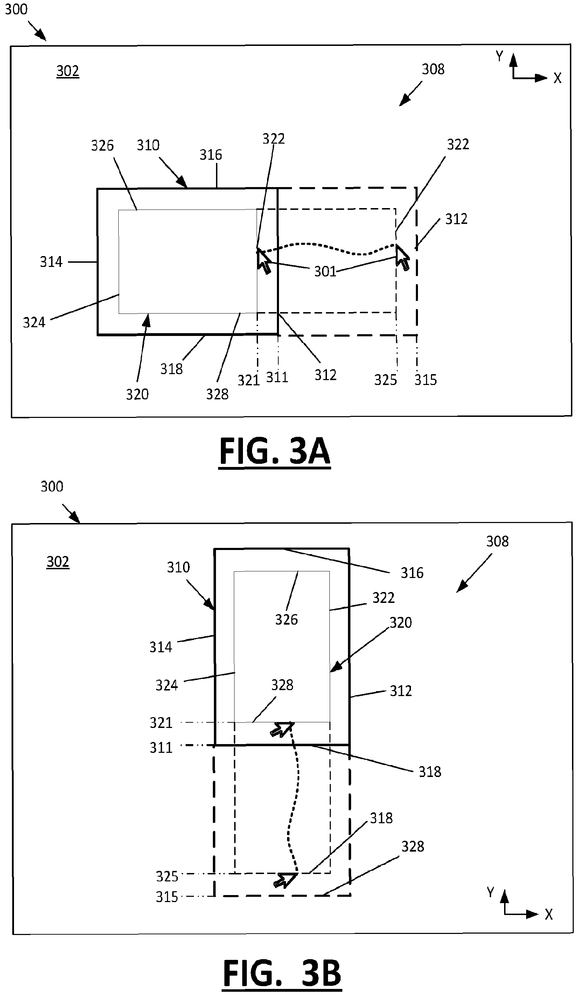

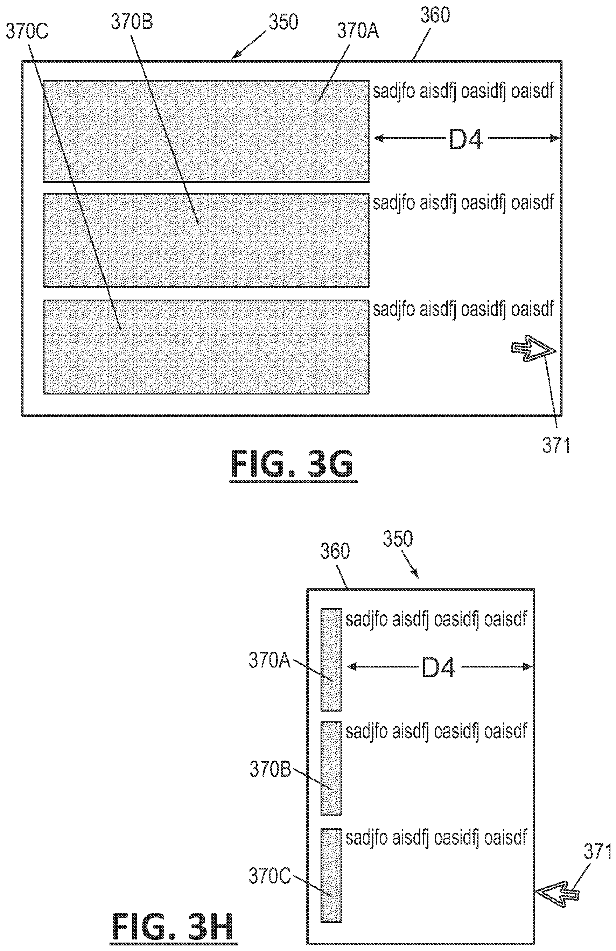

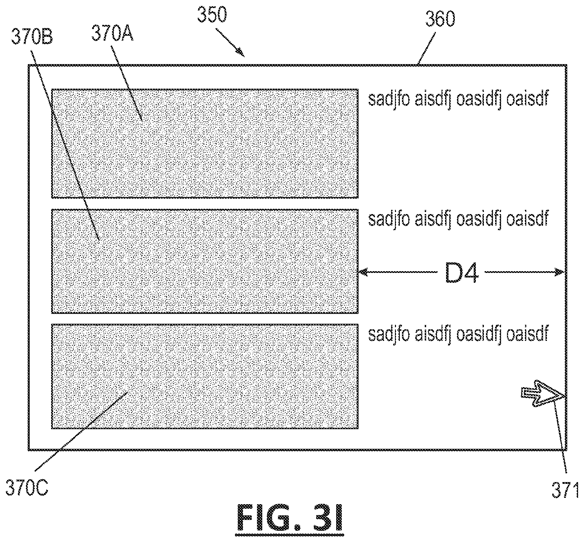

FIG. 3A through FIG. 3I illustrate alternative implementations of layout logic which can be provided by an interactive graphic design system, in accordance with one or more examples. In describing examples of FIG. 3A through FIG. 3I, reference may made to elements of FIG. 1A through FIG. 1C for purpose of illustrating suitable components for generating and implementing the user interfaces as described.

FIG. 3A and FIG. 3B illustrate a user interface 300 in which a DUE 308 is rendered on a canvas 302, with an object grouping including a parent object 310 and a child object 320. In an example of FIG. 3A, the object grouping 310, 320 is associated with a layout configuration and behavior that resizes the parent object 310 automatically in response to the child object 320 being resized horizontally (or along the X-axis). In an example shown, the child object 320 is resized (as illustrated by input 301), corresponding to the user selecting and dragging the right boundary 322 of the child object 320 from the original position 321 to the new position 325. As described with other examples, the layout engine 160 can execute the layout logic 162 to resize the parent object 310 automatically. As shown, the layout engine 160 automatically resizes the parent object 310 so that the right boundary 312 of the parent object is moved from the original position 311 to the new position 315.

In an example of FIG. 3B, the object grouping 310, 320 is associated with a layout configuration and behavior that resizes the parent object 310 automatically in response to the child object 320 being resized vertically (or along the Y-axis). Thus, if the child object 320 receives user input 301 to move the bottom boundary 328 from the original position 321 to a new position 325, the bottom boundary 318 of the parent object 310 is moved from its original position 311 to the new position 315.

In examples of FIG. 3A and FIG. 3B, the spacing between the parent object 310 and the child object 320 is maintained while the child object is being resized. Thus, the distance between the right boundaries 312, 322, the left boundaries 314, 324, the top boundaries 316, 326 and the bottom boundaries 318, 328 of the parent and child objects 310, 320 are unchanged after resizing occurs.

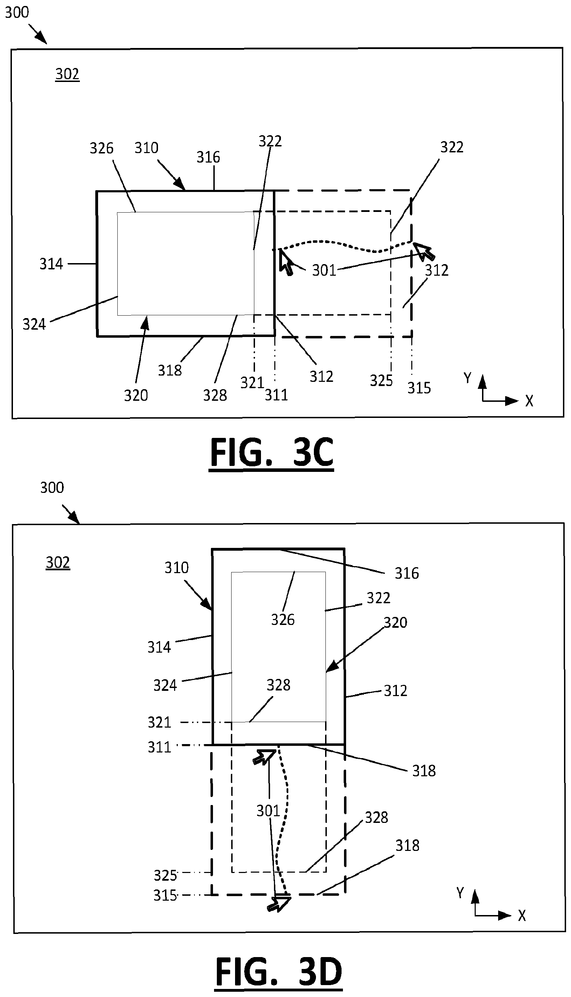

FIG. 3C illustrates a user interface 300 in which the object grouping 310, 320 is associated with a layout configuration and behavior that resizes the child object 310 automatically in response to the parent object 320 being resized horizontally (or along the X-axis) by a user input 301. The user input 301 can reposition (e.g., drag) a right boundary 312 of the parent object from an original position 311 to a new position 315. In response, the right boundary 322 of the child object 320 moves from an original position 321 to a new position 325, so that a spacing between the respective right boundaries 312, 322 is maintained when the parent object is resized. In this way, the spacing between the boundaries 312, 314, 316, 318 and 322, 324, 326, 328 of the respective parent 310 and child objects 320 is maintained.

FIG. 3D illustrates a variation of FIG. 3C, when the selected orientation for the layout logic is vertical, rather than horizontal. Accordingly, resize input 301 to reposition the bottom boundary 318 of the parent object 310 from an original position 311 to a new position 315, and the repositioning causes the bottom boundary of the child object 328 to move from the original position 321 to the new position 325. In this way, the spacing between the boundaries 312, 314, 316, 318 and 322, 324, 326, 328 of the respective parent 310 and child objects 320 is maintained.

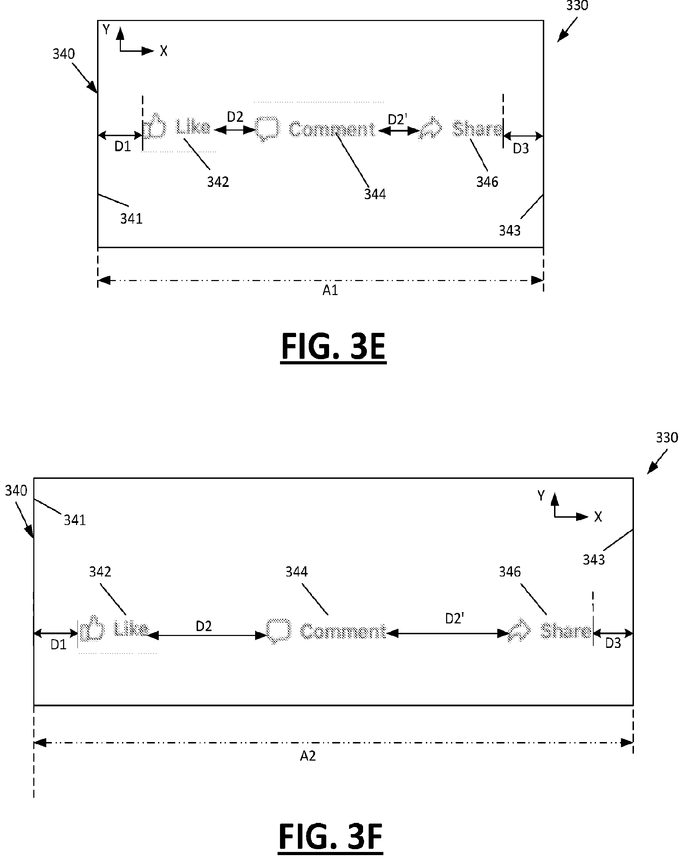

FIG. 3E and FIG. 3F illustrate an implementation of a spacing layout logic, according to one or more examples. With reference to an example of FIG. 3E and FIG. 3F, an object grouping 330 includes a parent object 340 and a group of child objects 342, 344, 346. As shown, the parent object 340 can include a frame with respective left and right boundary elements 341, 343. The child objects 342, 344, 346 can correspond to, for example, icons, active graphic elements, wireframe objects, text objects, imported objects (e.g., social media posts), and other types of graphic elements.

FIG. 3E reflect implementation of a spacing configuration that is implemented by layout engine 160 executing a spacing layout logic, resulting in one or more child objects 342, 344, 346 being fixed relevant to a corresponding boundary 341, 343 of the parent object 340. Accordingly, as shown by FIG. 3E, the separation distance (D1) between left boundary 341 and the most proximate child object 342 can be determined by default or by user input. Likewise, the separation distance (D3) between right boundary 343 and the most proximate child object 346 can also be determined by default or by user input. Thus, for example, the separation distance D1 and D3 can be the same or different, based on user input and/or default settings.

Additionally, FIG. 3E illustrates an example in which the child objects 342, 344, 346 of the parent object are evenly spaced from one another. For example, the first user can select layout logic to automatically implement an even spacing configuration amongst adjacent child objects, such as between the left-most child object 342 and middle child object 344(reflected by separation distance D2), and between middle child object 344 and the right-most child object 346 (reflected by separation distance D2'). Thus, execution of layout logic can result in the separation distance between adjacent child objects being equal (D2=D2').

In some examples, the layout logic can be associated with the parent/child object groupings 330, such that subsequent input to resize the parent object 340 results in the spacing configurations of the child objects 342, 344, 346 being maintained. In an example shown by FIG. 3E and FIG. 3F, the parent object 340 is resized from a first dimension (A1) (as shown with FIG. 3E) to a second dimension (A2) (as shown with FIG. 3F). As shown in FIG. 3F, the IGDS 100 can automatically execute the associated layout logic in response to second input (from the same or different user) to resize the parent object 340. Thus, once the parent object 340 is resized to a new dimension (A2), the child objects 342, 344, 346 can be reconfigured by: (i) maintaining a selected fixed separation distance between the left and/or right boundaries 341, 343 and the respective closest child object 342, 346, such that D1 and/or D3 remain unchanged once the parent object 340 is resized; and/or (ii) maintaining even spacing between adjacent child objects 342, 344, 346 such that D2 and D2' remain unchanged once the parent object 310 is resized. The IGDS 100 can execute the layout logic to implement one or more spacing configurations in accordance with a particular orientation (e.g., horizontal or vertical orientation). In FIG. 3E and FIG. 3F, for example, the spacing configuration(s) is shows as being implemented along a horizontal orientation. The horizontal orientation may be selected by default, automatically based on a preselected orientation (or alignment) of the parent object or the group of child objects 342, 344, 346 and/or by user preference or input. In other examples, the IGDS 100 can execute layout logic to implement spacing configurations in accordance with a vertical orientation, based on, for example, default settings, user input, and/or an orientation (or alignment) of the parent object 340 or the group of child objects 342, 344, 346.

FIG. 3G through FIG. 3J illustrate another implementation of stretch or fill layout logic, according to one or more examples. An object grouping 350 includes a parent object 360 and child object set 370A, 370B, 370C ("collectively child objects 370" or "child object set 370"). When fill layout logic is deployed, the user can make selections as to an orientation or direction in which the layout logic is applied. In FIG. 3G, the selected orientation for the deployment of the fill layout logic is horizontal. Accordingly, changes to the parent object 360 along the horizontal ( X-axis) can automatically result in corresponding changes to the child object set 370 in the same direction. As shown, for example, an input 371 can be applied by user to a right boundary of the parent object 360, causing the right boundary to reposition, and the parent object 360 as a whole to resize in the horizontal direction. As input 371 is applied to the right boundary of the parent object 360 to resize (expand and contract) along the X-direction, the child objects are similarly resized in the same direction, so that the spacing D4 between the boundaries of the child objects 370 and the parent object 360 remain the same. The implementation of the particular layout logic in a particular direction (e.g., horizontal) even though the horizontal axis is a counter axis to a direction of an object stack, which is in the vertical or Y direction.

FIG. 3G through FIG. 3I also illustrate that a particular type of layout can be configured to include additional configuration, such as additional spacing configuration. For example, as shown, a user can specify that a separation distance between the right boundaries of each of the child objects 370 and a corresponding right boundary of the parent object 360 have a particular spacing value (represented by D4) that includes padding. As shown, implementation of the corresponding layout configuration maintains the spacing D4 (with padding), as the parent object 360 is resized or repositioned.

In an example of FI. 3J, the object grouping is shown to include an additional child object 370D. The input 371 could be applied by the user to a top or bottom boundary of the parent object 360, causing the respective top/bottom boundary to reposition, and the parent object 360 as a whole to resize in the vertical direction. Similar to the case of horizontal resizing, vertical resizing the top or bottom boundary of the parent object 360 causes the child objects 370 to resize in the vertical direction. As illustrated in examples of FIG. 3G-3I, the spacing value (D4) between, for example, the right boundaries of the respective parent and child objects 360, 370 may remain fixed in response to the resizing input. Likewise, spacing between the respective top/bottom boundaries of the child objects 370 and the parent object 360 can also be designated to be fixed. As such, examples provide that the spacing between boundaries of parent/child objects 360, 370 can remain fixed, rather than change proportionately in relation to the respective change of the parent and child objects.

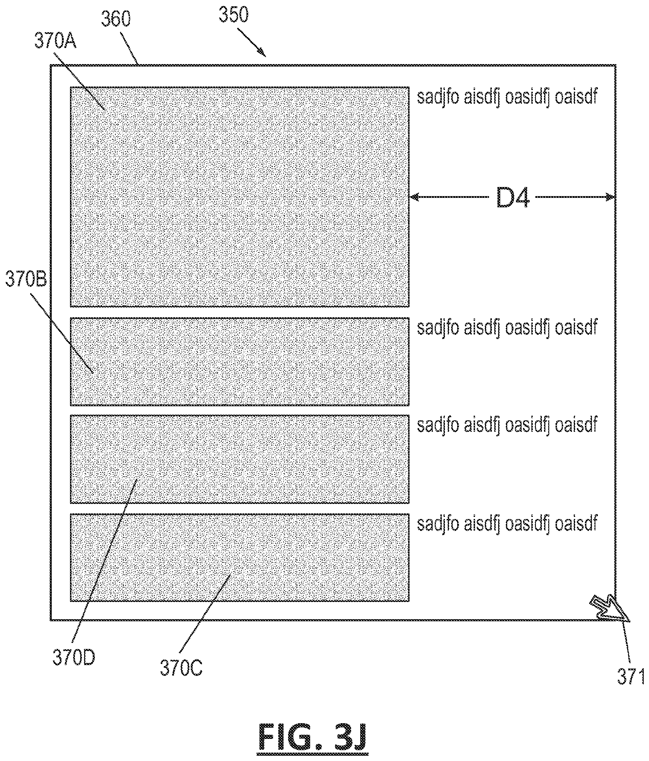

While examples shown with FIG. 3G-3J are described in context of 1-dimensional resize input 371, in variations, the input 371 can be received and applied in two dimensions. In other words, the user may provide input 371 to resize the parent object 360 in the horizontal and vertical directions, and the child objects 370 resize in both directions, as described by FIG. 3G-3I and FIG. 3J.

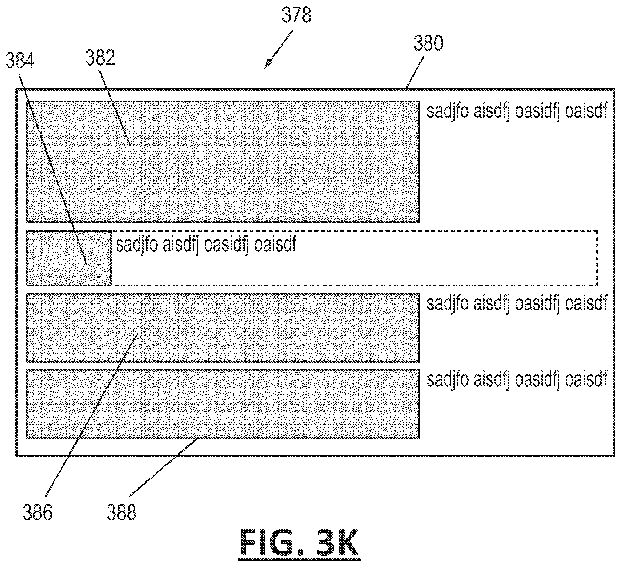

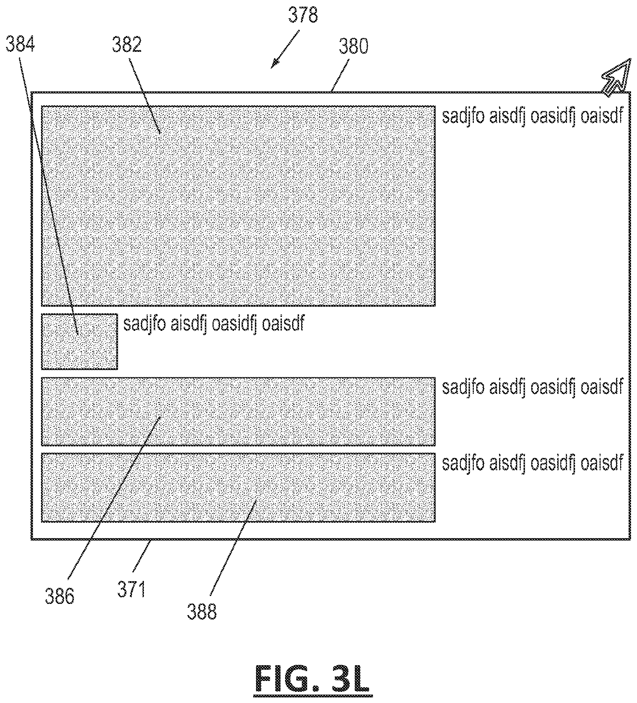

FIG. 3K and 3L illustrates the stretch or fill layout logic, as shown with an example of FIG. 3G through FIG. 3J, configured to resize a select object, rather than all of the child objects. For a parent/child object grouping 378, where parent object 380 includes child objects 382, 384, 386, resize input 381 is received for the parent object 380, causing the parent object 380 to resize in two dimensions. Further in the example shown, each child object 382, 384, 386, 388 is resized in one direction (e.g., horizontal direction). Additionally, a user selection or setting can selectively specify individual child objects 382, 384, 386, 388, such as the first child object 382 as shown, to resize in two directions. Thus, the resize behavior of the child objects 382, 384, 386, 388 can be individually configured to cause the respective child objects to resize in horizontal direction, vertical direction and/or both horizontal and vertical directions, responsively to a corresponding resize input to the parent object 380.

It will be appreciated that numerous similar variations can be implemented by other examples. For example, some child objects 382, 384, 386 may be designated (e.g., with user input) to resize in one direction that can be specified for that particular object, or alternatively, designated to not resize unless another child object is being resized to encroach on a dimension or spacing configuration of the child object.

While examples of FIG. 3G through FIG. 3L are specific to fill layout logic, in variations, the configurations and selections which the user can make (e.g., to apply the layout logic in a particular direction, to specific objects rather than a class of objects which could have the layout logic applied, spacing configuration, etc.) can be applicable to other types of layout logic, such as hug layout logic, wrap layout logic, spacing configuration layout logic and others.

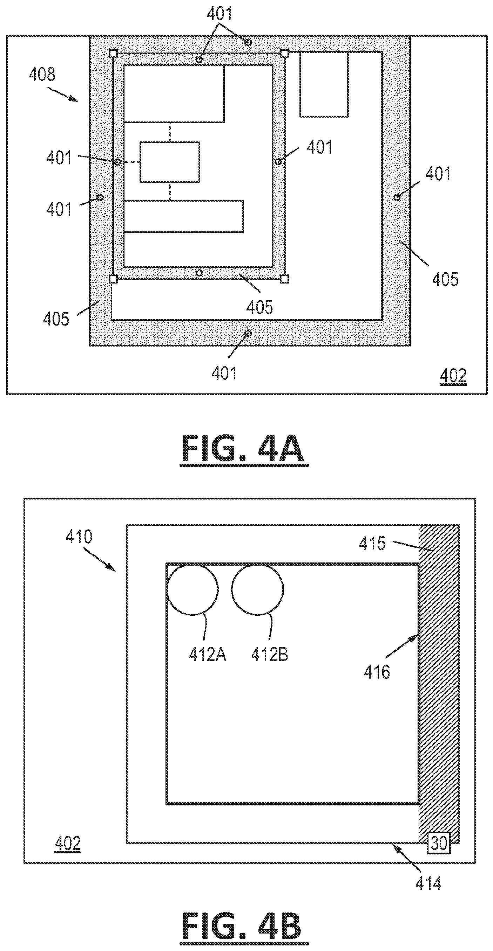

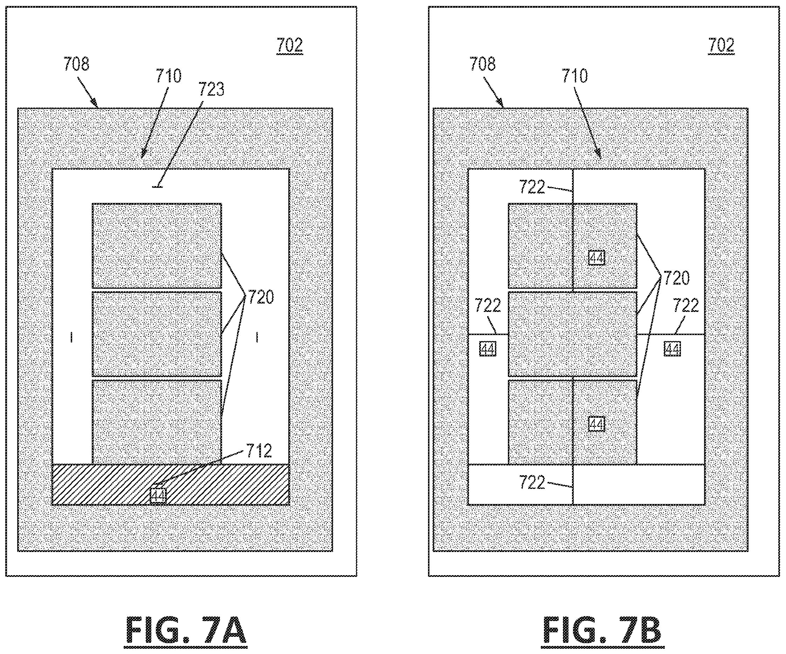

FIG. 4A through FIG. 4H illustrate examples in which spacing layout configurations of object groupings are visualized on a canvas of a design under edit. In particular, examples as shown by FIG. 4A through 4C illustrate object groupings 408, 410 which have layout logic that implements spacing configurations between objects of the object grouping. With reference to FIG. 4A, the IGDS 100 can, for example, generate a visualization with the object groupings 408 as rendered on a canvas 402, to indicate spacing configurations that may exist amongst or between objects of the object grouping. The visualization can be in the form of shading 405, coloring or other visual markers, as well as the user of markers 401 or other indicators. As described with other examples, the spacing configurations can specify padding, or fixed spacing, which is maintained at a specific amount when objects of an object grouping are resized or repositioned. The spacing configurations can also include dynamic spacing, which can be determined on the fly by rules - such as even spacing requirements as illustrated with examples of FIG. 3E and FIG. 3F. According to some examples, the user can interact with a canvas 402 in order to visually indicate the spacing configurations amongst (or between) objects of the object grouping 408. For example, spacing configurations (e.g., implemented by layout logic) can be visualized in a different color or shading to the user. Further, spacing configurations can be indicated by the markers 401 to show their existence and respective location. The user can view the spacing configurations through, for example, use of (i) a design tool provided on a side panel of the canvas, (ii) a shortcut key which the user can activate by, for example pressing and holding, and/or (iii) a canvas tool, such as described with FIG. 7A and FIG. 7B.

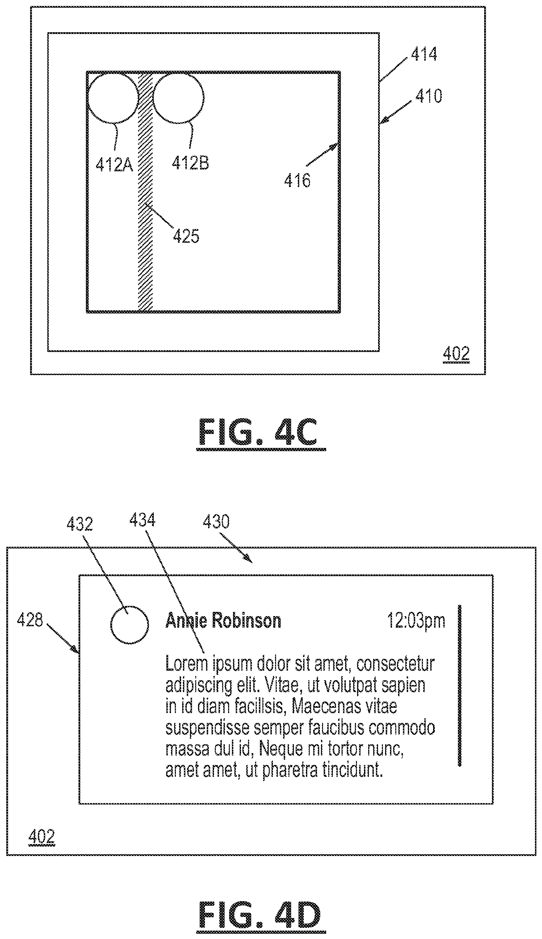

With reference to FIG. 4B and FIG. 4C, a visualization is displayed for the object grouping 410. As shown, the visualization may be the form of a colored or shaded band 415, to indicate a spacing configuration as between an outer parent object 414 and a child object 416. child objects 412A, 412B of a parent object 414 the object grouping 410. In the particular example, the visualization band 415 indicates the spacing configuration between a child object 422 and parent object 424. In FIG. 4C, a colored or shaded band 425 indicates the spacing configuration between adjacent objects, such as adjacent child objects 412A, 412B of a corresponding parent object 416.

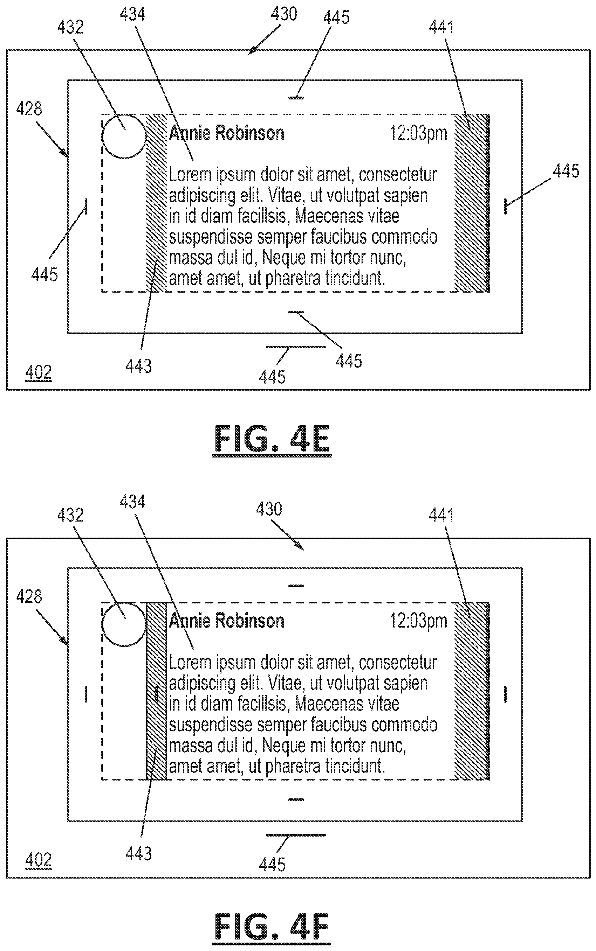

FIG. 4D and FIG. 4E illustrate the use of additional visualization to indicate spacing of objects, according to one or more examples. In FIG. 4D, a first object 432 (e.g., circle) is shown to be positioned adjacent to a second object 434 (e.g., text box) on the canvas 402. Both objects 432, 434 can be provided within a corresponding parent object 428, to form an object grouping 430. As shown in FIG. 4D, the rendering engine 120 can display by default the canvas 402 and object groupings 430 without any visualization that indicates the presence of a spacing configuration between individual objects of that grouping. In an example of FIG. 4E, the user provides hover input near and/or over the object groupings 430, or alternatively, near or over specific objects of the object grouping 430, to cause the rendering engine 120 to display one or more visualizations that indicate existing spacing configurations between the respective objects. For example, in FIG. 4E, the rendering engine 120 is shown to display (i) a band 441 to visualize a spacing configuration that exists between object 434 and parent object 428, (ii) a band 443 to visualize a spacing configuration that exists between child objects 432, 434, and (iii) one or more markers 445 that indicate a spacing configuration between the parent object 428 and the child objects 432, 434 (or a sub-parent object for child objects 432, 434).

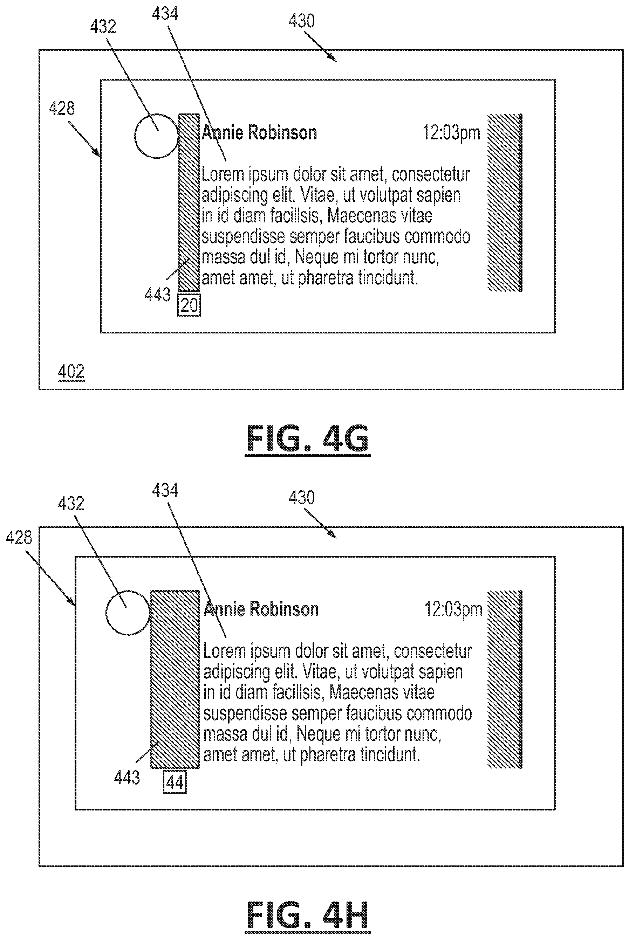

In examples, the user can further interact with the object grouping 430 on the canvas 402 to reconfigure one or more of the spacing configurations. In FIG. 4F through FIG. 4H, the IGDS 100 enables an embedded or on-canvas tool that allows the user to view and reconfigure spacing configurations between object. The tool can, for example, enable user interaction that can include positioning the pointer over one of the spacing configurations (e.g., the band 443) to make the band selectable (FIG. 4F). When made selectable, the user can provide additional input to alter the spacing configuration represented by the band 443 (FIG. 4G). For example, the user can provide input to make the boundaries selectable (e.g., FIG. 4G), and further to move the boundaries in a given direction (FIG. 4H).

Accordingly, as shown, some examples allow for the user to alter spacing configurations when the spacing configurations are visualized on the canvas. In this way, the user can reconfigure a particular layout logic such that the layout configuration includes updated spacing, as indicated by the user through his interaction with the design interface. In examples in which a tool is embedded or otherwise provided with the canvas, the user can alter the spacing configurations as between objects, and also for a particular layout logic that is applied to the object grouping, through interaction with the embedded tool of the canvas. This type of interaction can be more fluid and intuitive for the user. Examples recognize that design users are sometimes inconvenienced when having to interact with a tool panel. Accordingly, the rendering engine 120 can enable an embedded or on-canvas tool such as described with examples of FIG. 4A through FIG. 4H to enable the user to view and reconfigure spacing configurations.

In examples, spacing configurations of one or more layout logics can also be displayed as part of the tools provided on a side panel of the canvas 122. In examples, a tool panel (e.g., sidebar to canvas 402) can be synchronized with the spacing configurations, so that individual tools provide the user with direct access values of the existing spacing configurations of a design on the canvas 402. Furthermore, the tool panel can enable the existing values of the spacing configurations to be viewable.

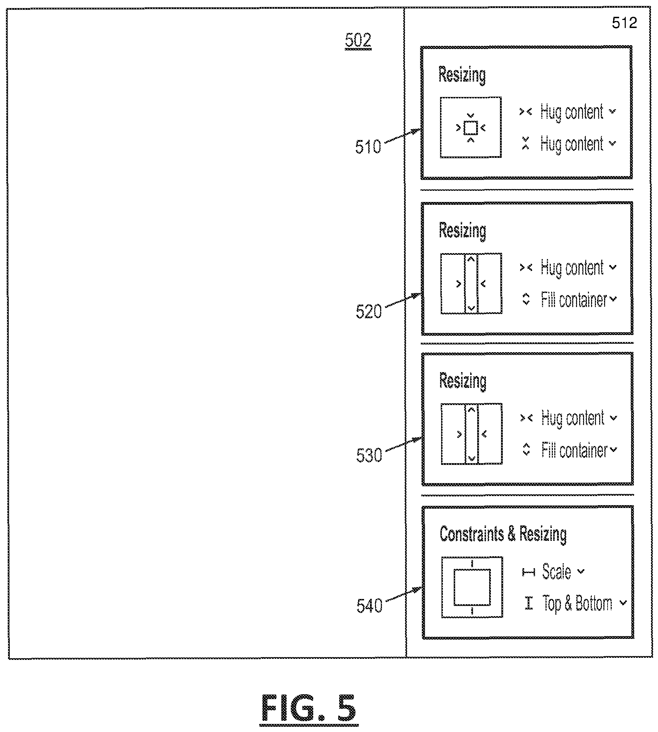

FIG. 5 illustrates example design tools for selecting and implementing layout logic for individual objects of object groupings. The IGDS 100 can generate layout configuration tools 510, 520, 530, 540 (collectively "design tools") that enable users to select layout configuration logic for object groupings of a given canvas 502. In some implementations, the layout configuration tools 510, 520, 530, 540 can be provided on an as-needed basis, where each layout configuration tool 510, 520, 530, 540 is associated with a corresponding object grouping on the canvas 502. For example, each layout configuration tool 510, 520, 530, 540 may be associated with object groupings of a given layer, level or position on the canvas 502. The user can further provide input to specify the properties for the tool, which coincide with the configuration that is to be implemented by target objects (or objects that are automatically resized, repositioned or reconfigured based on input for another object) of the respective object grouping. The user can specify the properties of the individual layout configuration tools using, for example, pulldown menus, text input boxes or other similar feature. By way of example, the properties for each layout configuration tool 510, 520, 530, 540 can specify (i) the target objects that are to be reconfigured based on user input that reconfigures another object, (ii) the type of behavior or layout operation that is to be automatically implemented by the target objects, and/or (iii) values for use in reconfiguring the target objects. For example, the user can specify a 'hug' property for a given object, meaning the object is to be resized based on its child objects being resized (e.g., by user input). The user can alternatively specify "fill" property for a given object (or object set), meaning the object is to resize relative to its parent object being resized. As an addition or variation, the properties can specify spacing configurations, such as "fixed spacing" or "even spacing" configurations.

Accordingly, example design tools enable a user to select layout configuration logic for object groupings, so as to configure layout object for orientation, spacing and other attributes. Additionally, the respective design tools can identify the target objects for implementation of the layout configuration logic. Additionally, some examples enable for different objects of a common object grouping to be linked with different types of layout configuration logic. For example, child objects of a common parent child object grouping may be associated with a different layout configuration logic as those associated with the parent object.

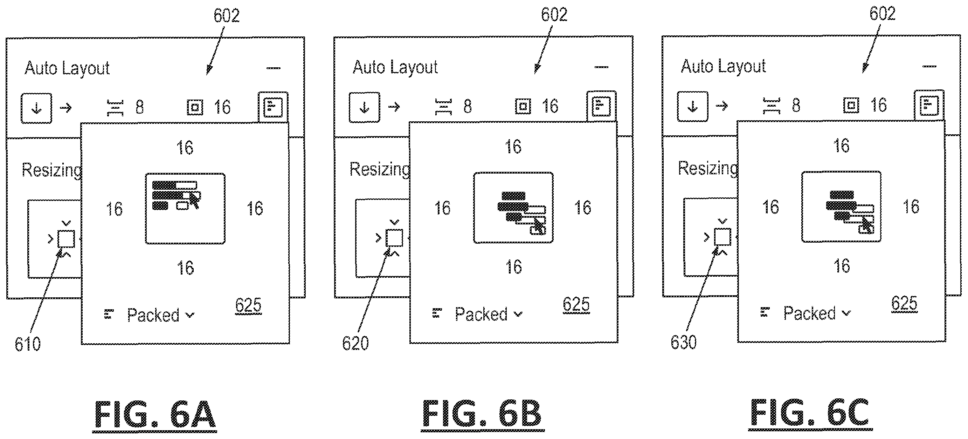

FIG. 6A through FIG. 6C illustrates use of a multi-state design tool that provides a preview of the design tools next state, according to one or more examples. A multistate design tool 610, 620, 630 can be provided as part of a tool bar 602 to associate a particular state with a configuration of an object or object grouping. For example, a layout for a given object or a set of objects can include different types of justification. A user's selection of a particular type of justification can reflect the design tools current state. If the user interacts with the design tool and initiates a selection to another state, the interactive design tool can display or provide preview 625, which indicates a representation of the next state which the user selection will make. Alternatively, the user selection can indicate or choose one of the states of the interactive design tool, and the preview can reflect the choice to the user before the user has committed to the choice. In the examples shown by FIG. 6A through FIG. 6C, the multi-state tools 610, 620, 630 correspond to layout configuration tools, such as shown in examples of FIG. 5. Accordingly, the multi-state tools 610, 620, 630 indicate the next state of an object or set of objects, based on layout configuration logic that is associated with the particular object or set of objects. In this way, the respective previews 625 can show how the target objects implement the layout configuration logic as a response to a particular type of input.

FIG. 7A and FIG. 7B illustrate implementation of an interactive design tool that can be embedded with a canvas on which a design under edit is rendered. The canvas 702 can include an object grouping 708, including parent object 710 and child object sets 720. The interactive design tool can provide visualizations of spacing configurations 712, 722 amongst the groupings of objects 708 that are rendered on a canvas 702. The spacing configurations can reflect a layout configuration of a linked layout logic, as well as the spacing between objects which may not be grouped are linked to a particular layout logic. The user can interact with the tool, which is embedded to receive input directed to the canvas 702 (e.g., pointer can be hovered over or near the areas of the spacing configurations). The user interactions can include for example, the user clicking and dragging to increase/decrease spacing configurations between objects and implementing the change with respect to the particular layout logic for future implementation or execution of that logic.

In some variations, the embedded tool can display number reflecting a quantity or amount of the spacing. The user can further interact with the number in order to change the spacing configuration of the particular configuration layout.

Still further, in some examples, an object grouping can be associated with a first type of layout logic. The IGDS 100 can include a design tool, such as an embedded canvas tool, to enable the user to toggle between the current layout logic (e.g., the first type of layout logic) and one or more alternative layout configurations provided by different types of layout logic. For example, a user can toggle between a hug layout configuration and a stretch layout configuration using a toggle feature provided as an interactive tool or a tool embedded with the canvas. The toggling can cause, for example, the layout engine 160 to implement the alternative types of layout logic, with each layout logic resulting in the object grouping being shown to have a different layout configuration. In this way, the user can view the effects of applying different types of layout logic to an object grouping.

### NETWORK COMPUTER SYSTEM

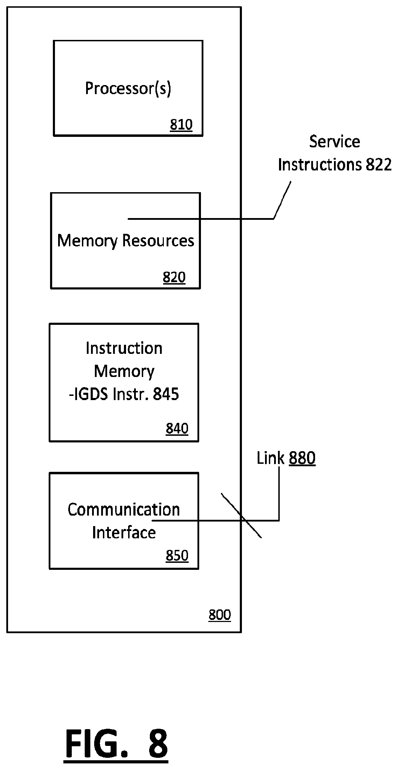

FIG. 8 illustrates a computer system on which one or more embodiments can be implemented. A computer system 800 can be implemented on, for example, a server or combination of servers. For example, the computer system 800 may be implemented as the network computing system 150 of FIG. 1B and FIG. 1C.

In one implementation, the computer system 800 includes processing resources (or processor(s)) 810, memory resources 820 (e.g., read-only memory (ROM) or random-access memory (RAM)), one or more instruction memory resources 840, and a communication interface 850. The computer system 800 includes at least one processor 810 for processing information stored with the memory resources 820, such as provided by a random-access memory (RAM) or other dynamic storage device, for storing information and instructions which are executable by the processor(s) 810. The memory resources 820 may also be used to store temporary variables or other intermediate information during execution of instructions to be executed by processor(s) 810.

The communication interface 850 enables the computer system 800 to communicate with one or more user computing devices, over one or more networks (e.g., cellular network) through use of the network link 880 (wireless or a wire). Using the network link 880, the computer system 800 can communicate with one or more computing devices, specialized devices and modules, and/or one or more servers.

In examples, processor(s) 810 execute instructions, stored with the memory resources 820, in order to enable the network computing system to implement the network service 152 and operate as the network computing system 150 in examples such as described with FIG. 1A through FIG. 1C.

The computer system 800 may also include additional memory resources ("instruction memory 840") for storing executable instruction sets ("IGDS instructions 845") which are embedded with web-pages and other web resources, to enable user computing devices to implement functionality such as described with the IGDS 100.

As such, examples described herein are related to the use of the computer system 800 for implementing the techniques described herein. According to an aspect, techniques are performed by the computer system 800 in response to the processor(s) 810 executing one or more sequences of one or more instructions contained in the memory resources 820. Such instructions may be read into the memory resources 820 from another machine-readable medium. Execution of the sequences of instructions contained in memory resources 820 causes the processor(s) 810 to perform the process steps described herein. In alternative implementations, hard-wired circuitry may be used in place of or in combination with software instructions to implement examples described herein. Thus, the examples described are not limited to any specific combination of hardware circuitry and software.

### USER COMPUTING DEVICE

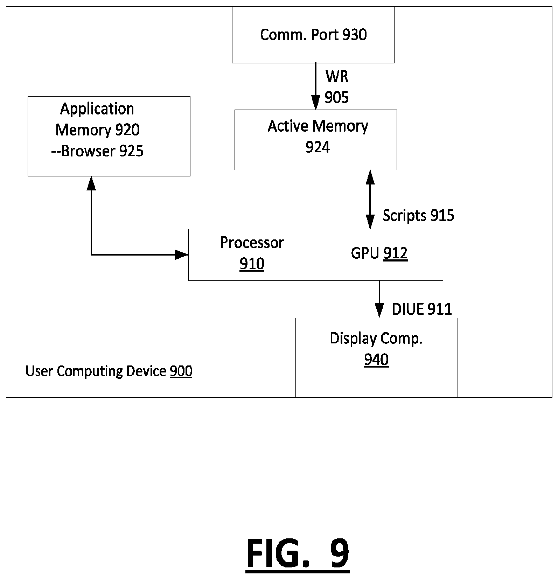

FIG. 9 illustrates a user computing device for use with one or more examples, as described. In examples, a user computing device 900 can correspond to, for example, a work station, a desktop computer, a laptop or other computer system having graphics processing capabilities that are suitable for enabling renderings of design interfaces and graphic design work. In variations, the user computing device 900 can correspond to a mobile computing device, such as a smartphone, tablet computer, laptop computer, VR or AR headset device, and the like.

In examples, the computing device 900 includes a central or main processor 910, a graphics processing unit 912, memory resources 920, and one or more communication ports 930. The computing device 900 can use the main processor 910 and the memory resources 920 to store and launch a browser 925 or other web-based application. A user can operate the browser 925 to access a network site of the network service 152, using the communication port 930, where one or more web pages or other resources for the network service 152 (see FIG. 1A through FIG. 1C) can be downloaded. The web resources 905 can be stored in the active memory 924 (cache).

As described by various examples, the processor 910 can detect and execute scripts and other logic which are embedded in the web resource in order to implement the IGDS 100 (see FIG. 1A through FIG. 1C). In some of the examples, some of the scripts 915 which are embedded with the web resources 905 can include GPU accelerated logic that is executed directly by the GPU 912. The main processor 910 and the GPU can combine to render a design interface under edit ("DUE 911") on a display component 940. The rendered design interface can include web content from the browser 925, as well as design interface content and functional elements generated by scripts and other logic embedded with the web resource 905.By including scripts 915 that are directly executable on the GPU 912, the logic embedded with the web resource 915 can better execute the IGDS 100, as described with various examples.

### CONCLUSION

Although examples are described in detail herein with reference to the accompanying drawings, it is to be understood that the concepts are not limited to those precise examples. Accordingly, it is intended that the scope of the concepts be defined by the following claims and their equivalents. Furthermore, it is contemplated that a particular feature described either individually or as part of an example can be combined with other individually described features, or parts of other examples, even if the other features and examples make no mentioned of the particular feature. Thus, the absence of describing combinations should not preclude having rights to such combinations.

## Claims

1. A network computer system comprising:
a memory sub-system to store a set of instructions;
one or more processors that operate to communicate the set of instructions to a plurality of user devices, wherein the set of instructions include instructions that when executed by at least a first user device of the plurality of user devices, causes the first user device to:
make a collection of layout logics available in connection with a design interface under edit that is rendered on a user device of the plurality of user devices, wherein each layout logic of the collection is executable with rendering of a select object grouping of the design interface under edit to (i) identify each of a target object set and an associated object set of the select object grouping, and (ii) apply a predefined layout configuration to the identified target object set in response to resizing or repositioning of one or more objects of the associated object set;
detect user input to select a layout logic of the collection for a rendered object grouping of the design interface under edit;
link the selected layout logic with the select object grouping of the design interface under edit; and
detect input to resize or reposition at least one object of the rendered object grouping that is included in the associated object set of the selected layout logic;
in response to detecting the input, automatically implement a predefined layout configuration to the target object set of the selected layout logic.

2. The network computing system of claim 1,
wherein for the selected layout logic, the target object set includes one or more child objects of a parent/child object grouping, and the associated object set includes a parent object of the parent/child grouping;
wherein the first user device detects input to resize or reposition the parent object; and
wherein the predefined layout configuration of the selected logic layout is automatically implemented to resize or reposition one or more child objects of the parent object.

3. The network computing system of claim 2, wherein the predefined layout configuration of the selected logic layout is automatically implemented to resize or reposition the one or more child objects of the parent object so as to maintain a predetermined spatial relationship between at least a boundary of the parent object and a boundary of the one or more child objects.

4. The network computing system of claim 2, wherein the instructions cause the first device to selectively apply, in response to user input, the selected layout logic to one or more objects of the parent/child object grouping, but not all of the objects of the parent/child grouping.

5. The network computing system of claim 1, wherein the predefined layout configuration of the selected layout logic includes maintaining an interior spacing between each adjacent pair of child objects of the parent/child object grouping to be equal to one another.

6. The network computing system of claim 5, wherein the predefined layout configuration includes maintaining a boundary spacing between at least a first border of the parent object and a border of an adjacent child of the parent/children object grouping.

7. The network computing system of claim 1,
wherein for the selected layout logic, the target object set includes a parent object of a parent/child object grouping, and the associated object set includes one or more child objects of the parent/child grouping;
wherein the first user device detects input to resize or reposition the one or more child objects; and
wherein the predefined layout configuration of the select logic layout is automatically implemented to resize or reposition the parent object.

8. The network computing system of claim 1, wherein the instructions cause the first device to select a horizontal or a vertical direction for application of the selected layout logic.

9. The network computing system of claim 1, wherein the network computing system implements a collaborative environment in which a first user provides selection input for selecting the layout logic from the collection of layout logics, and a second user provides input to resize or reposition at least one object of the rendered object grouping that is included in the associated object set of the selected layout logic.

10. A non-transitory computer-readable medium that stores instructions, which when executed by one or more processors of a computer system, cause the computer system to perform operations that include:
making a collection of layout logics available in connection with a design interface under edit that is rendered on a user device of the plurality of user devices, wherein each layout logic of the collection is executable with rendering of a select object grouping of the design interface under edit to (i) identify each of a target object set and an associated object set of the select object grouping, and (ii) apply a predefined layout configuration to the identified target object set in response to resizing or repositioning of one or more objects of the associated object set;
detecting user input to select a layout logic of the collection for a rendered object grouping of the design interface under edit;
linking the selected layout logic with the select object grouping of the design interface under edit; and
detecting input to resize or reposition at least one object of the rendered object grouping that is included in the associated object set of the selected layout logic;
in response to detecting the input, automatically implementing a predefined layout configuration to the target object set of the selected layout logic.
